# EUROPEAN PATENT APPLICATION

(11) **EP 1 980 934 A1**
(43) Date of publication of application: **15.10.2008**
(21) Application number: 07707326.0
(22) Date of filing: 24.01.2007
(51) Int. Cl.: G06F 3/041, G06F 21/20, H04M 1/673

(54) **INPUT DEVICE FOR INPUTTING PASSWORD OR THE LIKE AND PORTABLE TELEPHONE DEVICE HAVING THE INPUT DEVICE**

(30) Priority: 30.01.2006 JP 2006020131; 30.01.2006 JP 2006020132
(71) Applicant: SANYO Consumer Electronics Co., Ltd., Tottori 6808634 (JP)
(72) Inventor: YAMASHITA, Takahiro, c/o Sanyo Consumer Electronics Co., Ltd, Tottori-shi, Tottori 6808634 (JP); YAMASHITA, Yukari, c/o Sanyo Consumer Electronics Co., Ltd, Tottori-shi, Tottori 6808634 (JP); KAWAGUCHI, Mitsuhisa, c/o Sanyo Consumer Electronics Co., Ltd, Tottori-shi, Tottori 6808634 (JP); SATO, Takahiro, c/o Sanyo Consumer Electronics Co., Ltd, Tottori-shi, Tottori 6808634 (JP); TAIRA, Katsunobu, c/o Sanyo Consumer Electronics Co., Ltd, Tottori-shi, Tottori 6808634 (JP)
(74) Representative: HOFFMANN EITLE
(86) International application number: PCT/JP2007/051079
(87) International publication number: WO 2007/086420

(57) **Abstract**

An input device capable of avoiding simple input of the correct password and a portable telephone device are provided. A contact sensor (56) enabling input of a line by moving a finger of a user on an area where numeric keys (48) of a portable telephone (10) are arranged is provided in the area. When password information for cancelling key-lock is registered, the user moves a finger of the user on the contact sensor (56) to input a linear shape. The data on the key with which the user first comes to contact when the user tries to input the line and the data on the key from which the user separates the user's finger last are registered for each place, thus completing the registration of the password. When the user wants to cancel the key-lock, the user operates the contact sensor similarly to the registered content. Then the key-lock is cancelled.

## Description

### [Technical Field]

The present invention relates to an input device for inputting a password or the like and a portable telephone having the input device.
More particularly, the present invention relates to an input device, having a contact sensor provided on the surface of an operation unit thereof, for inputting a password or the like, and a portable telephone having the input device.

### [Related Art]

In recent years, a large number of portable telephones equipped with a key-lock function have been available. The key-lock function works as follows; when a user switches the key-lock function on, the keys of a portable telephone become in an invalid state, that is, a state such that key operation cannot be performed. While the key-lock is on, the keys will be in a valid state, that is, the state that the key operation can be performed by the user inputting a predetermined four digit password.

By using the key-lock function, for example, a mistaken key operation when a portable telephone is put in a pocket or use by a stranger when a portable telephone is lost can be avoided.

Moreover, various technologies on the key-lock function have been proposed. For example, in the following Patent Document 1 (JP-A-11-32369), a technology to turn on the key-lock function of a portable telephone by a remote operation is stated.
[Patent Document 1]
JP-A-11-32369

### [Disclosure of the Invention]

### [Problems to be Solved by the Invention]

However, as for the key-lock function equipped on related art portable telephones, and even for the technology mentioned in Patent Document 1 mentioned above, by inputting a four digit password by an operation of a numeric keypad, the key-lock function is turned off.

However, if a portable telephone set in a key-locked state is passed to a stranger, the stranger may input a four digit password at random and turn off the key-locked state.

In view of such problems, in comparison with the related art technology, it is an object of the present invention to provide an input device for inputting a password or the like that makes it more difficult for a correct password to be inputted by a third person, and a portable telephone having the input device.

### [Means to Solve the Problems]

To solve the above-mentioned problems, an invention according to claim 1 of the present invention is an input device for inputting a password including: a contact sensor; storage means for storing line information inputted by a finger touching the contact sensor; disabling means for disabling an execution of a particular function; and control means for permitting, while the disabling means disables the particular function, execution of the particular function upon determining that the line information stored in the storage means is inputted from the contact sensor.

The invention according to claim 2 of the invention, in accordance with the invention of claim 1, is arranged such that the storage means stores first information indicating a position where a finger touches on the contact sensor, and second information indicating a position where the finger is lifted up from the contact sensor after continuous touching.

The invention according to claim 3 of the invention, in accordance with the invention of claim 2, is arranged such the control means permits, while the disabling means disables a particular function, execution of the particular function upon determining that the first information and the second information stored in the storage means are inputted from the contact sensor.

The invention according to claim 4 of the invention, in accordance with the invention of claim 2, is arranged such that the contact sensor has a plurality of keys for detecting a finger contact, and the storage means stores a plurality of pairs associating the first information with the second information, the first information indicating a key where a finger touches on the contact sensor, and the second information indicating a key where the finger is lifted up from the contact sensor after continuous touching.

The invention according to claim 5 of the invention, in accordance with the invention of claim 1, is arranged such that the storage means stores information showing in which row or column on the contact sensor the line is inputted, as the line information indicating where a finger touches on the contact sensor.

An invention according to claim 6 of the invention is a portable telephone having an input device including: a contact sensor; storage means for storing line information inputted by a finger touching the contact sensor; disabling means for disabling an execution of a particular function; and control means for permitting, while the disabling means disables a particular function, execution of the particular function upon determining that the line information stored in the storage means is inputted from the contact sensor.

The invention according to claim 7 of the invention, in accordance with the invention of claim 6, is arranged such that the storage means stores first information indicating a position where a finger touches on the contact sensor, and second information indicating a position where the finger is lifted up from the contact sensor after continuous touching.

The invention according to claim 8 of the invention, in accordance with the invention of claim 7, is arranged such that the control means permits, while the disabling means disables a particular function, execution of the particular function upon determining that the first information and the second information stored in the storage means are inputted from the contact sensor.

The invention according to claim 9 of the invention, in accordance with the invention of claim 7, is arranged such that the contact sensor has a plurality of keys for detecting a finger contact, and the storage means stores a plurality of pairs associating the first information with the second information, the first information indicating a key where a finger touches on the contact sensor, and the second information indicating a key where the finger is lifted up from the contact sensor after continuous touching.

The invention according to claim 10 of the invention, in accordance with the invention of claim 6, is arranged such that the storage means stores information showing in which row or column of the contact sensor the line is inputted as the line information indicating where a finger touches on the contact sensor.

### [Effects of the Invention]

In accordance with the invention of claim 1, when each digit of a password is inputted, a line such as a straight line is inputted by a user moving a finger on a contact sensor, and a disabled particular function is canceled upon determination that the same line information is inputted by the user based on the line information. Thus, in comparison with the password input with a conventional numeric keypad, a password can be inputted more easily. In addition, it is possible to avoid a password being easily known to a stranger.

In accordance with the invention of claim 2 and claim 3, to input each digit of a password, unless the position information on the key which the user first touches and the position information on the key which the user has touched immediately before the user's finger was last lifted up are matched for each digit, the key-lock cannot be canceled. Thus, in comparison with a related art method for merely entering a four digit number by a depressing operation, the password input is complicated, which can make it difficult for a third person to input a correct password.

In accordance with the invention of claim 4, a plurality of keys for detecting a finger contact are provided, and the plurality of pairs associating, the position information indicating the key position where the finger first touches on the contact sensor with the position information indicating the key position where the finger has touched immediately before the user's finger is lifted up from the contact sensor after continuous touching are stored. Thus, in comparison with a related art method for entering a four digit number by a depressing operation, the password input is complicated, which can make it more difficult for a third person to input a correct password.

In accordance with the invention of claim 5, as line information inputted on the contact sensor, the storage means stores information showing in which row or column of the contact sensor the line is inputted, and unless there is a match in position information, the key-lock cannot be canceled. Thus, in comparison with a related art method for merely entering a four digit number by a depressing operation, a third person cannot easily know the inputted line information and finds it difficult to input a correct password.

In accordance with the invention of claims 6 to 10, a portable telephone having the input device of claims 1 to 5 for inputting a password can be provided.

### [Brief Description of Drawings]

[Fig. 1] Fig. 1 is a perspective view of an embodiment device, to which the present invention is applied.
[Fig. 2] Fig. 2 is a perspective diagram showing a use form of the embodiment device.
[Fig. 3] Fig. 3 is a block diagram of the embodiment device.
[Fig. 4] Fig. 4 is a cross section view showing the vicinity of a contact sensor.
[Fig. 5] Fig. 5 is a display form of the embodiment device, in which Figs. 5A through 5D are diagrams respectively showing password digits: a first to a fourth digits.
[Fig. 6] Fig. 6 is a flow diagram showing an operation performed to input and store the password shown in Fig. 5.
[Fig. 7] Fig. 7 is a flow diagram showing an operation performed when the password shown in Fig. 5 is inputted.
[Fig. 8] Fig. 8 is a display form of another embodiment device of the present invention, in which Figs. 8A through 8D are diagrams respectively showing password digits: a first to a fourth digits.
[Fig. 9] Fig. 9 is a flow diagram showing an operation performed to input and store the password shown in Fig. 8.
[Fig. 10] Fig. 10 is a flow diagram showing an operation performed when the password shown in Fig. 8 is inputted.
[Fig. 11] Fig. 11 is a conceptual diagram describing a concept of a matching determination of input data for a password or a PIN line registration, in which Fig. 11A is a diagram schematically showing a content of a buffer storing first inputted data, and Fig. 11B is a diagram schematically showing a content of a buffer storing data shape inputted again.

### [Explanation of Letters or Numerals]

- 10: Portable telephone
- 36: Control circuit
- 40: ROM
- 44: Input unit
- 48: Numeric keys
- 56: Contact sensor
- 71: Buffer

### [Best Mode(s) for Carrying Out the Invention]

A portable telephone according to an embodiment of the invention is described with the reference to the drawings.

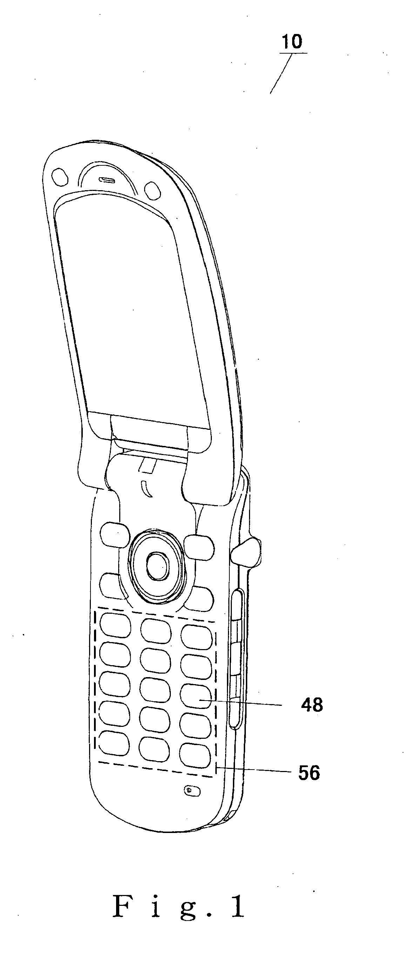

Fig. 1 is a perspective view of a portable telephone which is an embodiment device of the present invention. The portable telephone according to the present embodiment has a contact sensor 56 capable of being operated by user's touching with a finger besides a normal key operating unit such as numeric keys 48. In addition, the above-mentioned contact sensor 56 is arranged on the numeric keys 48 and in a region around the numeric keys 48.

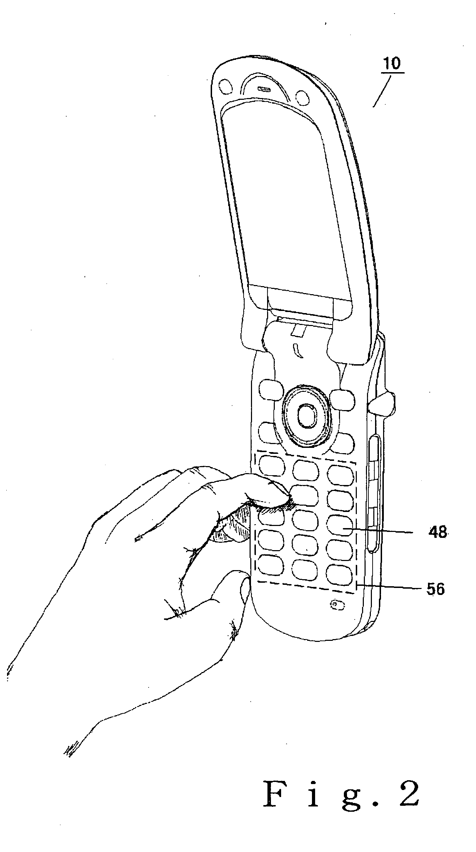

Fig. 2 is a perspective view showing a use form of the present embodiment. A user can perform input operation by tracing with a user's finger on the numeric keys 48 and the contact sensor 56 (a part surrounded in a dotted line of Fig. 2) arranged around the numeric keys 48.

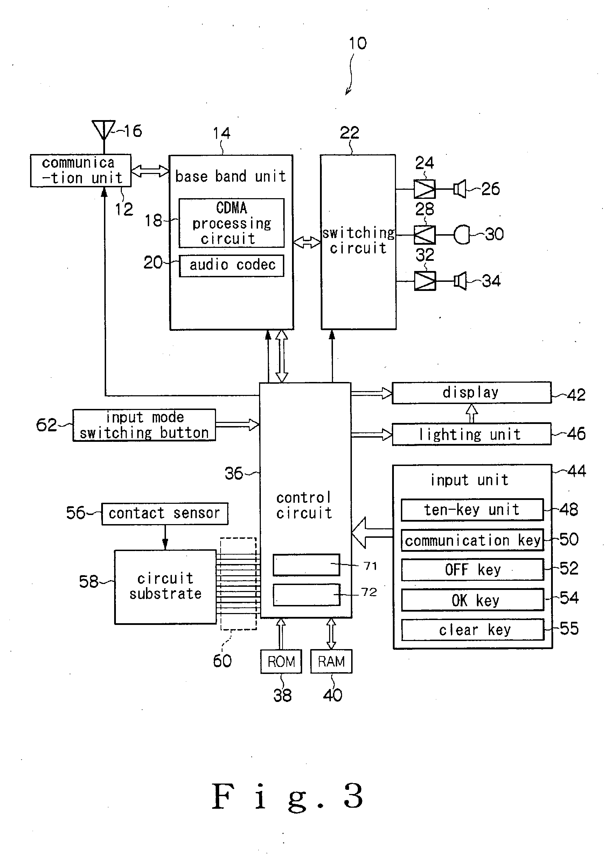

As shown in Fig. 3, a portable telephone 10 has a communication unit 12 connected to an antenna 16. The communication unit 12 sends a signal from a base band unit 14 (described later) to a base station via the antenna 16, and receives electric wave from the base station via the antenna 16.

In addition, the communication unit 12 is connected to the base band unit 14. The base band unit 14 has a CDMA processing circuit 18 and an audio codec 20. Here, the CDMA processing circuit 18 performs code division multiple access, scramble, an error control, and timing detection.
In addition, the audio codec 20 compresses (encodes) and expands (decodes) voice, performs an analog-to-digital conversion, and changes received sound volume and a sensitivity of the microphone by an internal amplifier circuit (not shown).

Additionally, a switching circuit 22 is connected to the base band unit 14. The switching circuit 22 is connected to a first speaker 26 via an amplifier circuit 24. The first speaker 26 converts the electric signal of the base band unit 14 amplified in the amplifier circuit 24 into voice. The first speaker 26 is attached to a user's ear at the time of use in telephone conversation.

Moreover, a microphone 30 is connected to the switching circuit 22 via an amplifier circuit 28. The microphone 30 is used for telephone conversation, and converts voice into an electric signal. The electric signal output from the microphone 30 is amplified in the amplifier circuit 28, and is output to the base band unit 14.

Further, the switching circuit 22 is connected to a second speaker 34 via an amplifier circuit 32. The second speaker 34 converts the electric signal of the base band unit 14 amplified in the amplifier circuit 32 into voice. The second speaker 34 is a speaker for loudspeaking to allow surrounding people to listen to received voice. In addition, the second speaker 34 performs a ringing operation to report an incoming call. Note that, these three amplifier circuits 24, 28, and 32 each have a fixed gain. Therefore, audio volume of the first speaker 26 and the second speaker 34 and the sensitivity of the microphone 30 cannot be changed.

The switching circuit 22 switches whether a connection with the base band unit 14 is to the amplifier circuit 24 for the first speaker 26 and the amplifier circuit 28 for the microphone 30, or to the amplifier circuit 32 for the second speaker 34 for loudspeaking and the amplifier circuit 28 for the microphone 30.

In addition, the communication unit 12, the base band unit 14, and the switching circuit 22 are connected to the control circuit (the control unit) 36. The switch by the switching circuit 22 stated above is performed by a control of the control circuit 36. In addition, the audio codec 20 of the base band unit 14 is controlled by the control circuit 36, and audio volume of the first speaker 26 and the second speaker 34 and the sensitivity of the microphone 30 are changed by the audio codec 20. The control circuit 36 is connected to a ROM 38, and each part is controlled based on a system program stored in the ROM 38.

Additionally, the control circuit 36 is connected to an input unit 44. The input unit 44 includes the numeric keys 48 for inputting a phone number and the like, a communication key 50 for operating a start of a telephone conversation, an OFF key 52 for operating an end of a telephone conversation, an OK key 54, and a clear key 55.

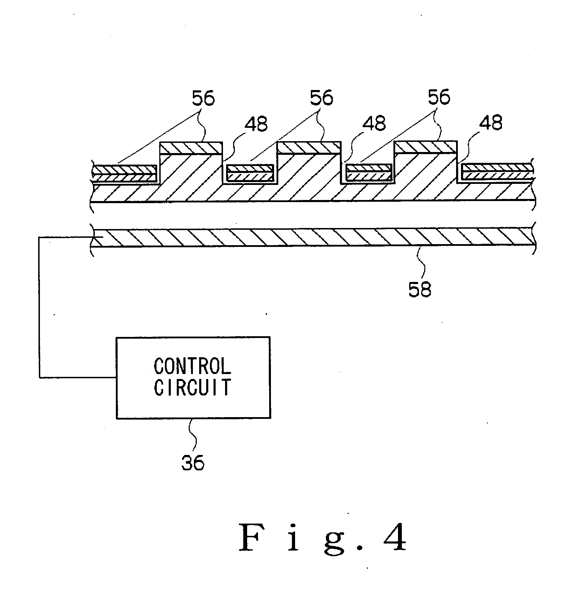

Here, the numeric keys 48 includes input buttons 0 through 9, a # button, and a * button (12 buttons altogether in the present embodiment). Additionally, as shown in Fig. 4, on the entire surface of the numeric keys 48, and on the surface of the case around the numeric keys 48, the contact sensor 56 for detecting a user's touch is provided. The contact sensor 56 arranged on the case and the keytop of the portable telephone is electrically connected to the control circuit 36. As a result, a signal indicating that a user touches the contact sensor 56 is inputted into the control circuit 36.

It is noted that, in the embodiment device, the contact sensor 56 is arranged on the surface of the case, but it may be arranged inside the case such as a rear side of the case and the keys 48. For example, any capacitance-detecting type contact sensor can be arranged inside the case. Moreover, when the contact sensor 56 is arranged on the whole rear side of the keys 48, in comparison with the contact sensor 56 arranged on the key top, the wiring is markedly simplified.

In addition, the control circuit 36 is connected to an illuminator section 46 including, for example, LED elements.

In RAM 40, four digit password data is stored.

Within the control circuit 36 are provided a buffer 71 that temporarily stores a password inputted from the contact sensor 56. Additionally, the buffer 71 associates and stores data on the number of places indicating in which digit the number inputted from the contact sensor is, data indicating which number a finger first touches, and data indicating from which number the finger is lifted up. Furthermore, such data for up to four digits can be stored. The detailed operation is explained below.

The embodiment device has such a structure. In the next place, an operation in an embodiment of a portable telephone structured as shown in Fig. 3 is described below.

In the present embodiment, as a password to be inputted with the contact sensor 56, not a numerical value entered from a conventional numeric keypad, but line information drawn by touching continually the contact sensor 56 with a finger is used. For example, positions of the beginning and the end of touching with the finger, that is, on the contact sensor 56, first information indicating a position where a finger touches, and second information indicating a position where the finger is lifted up after continuous touching are inputted, registered, stored, and collated.

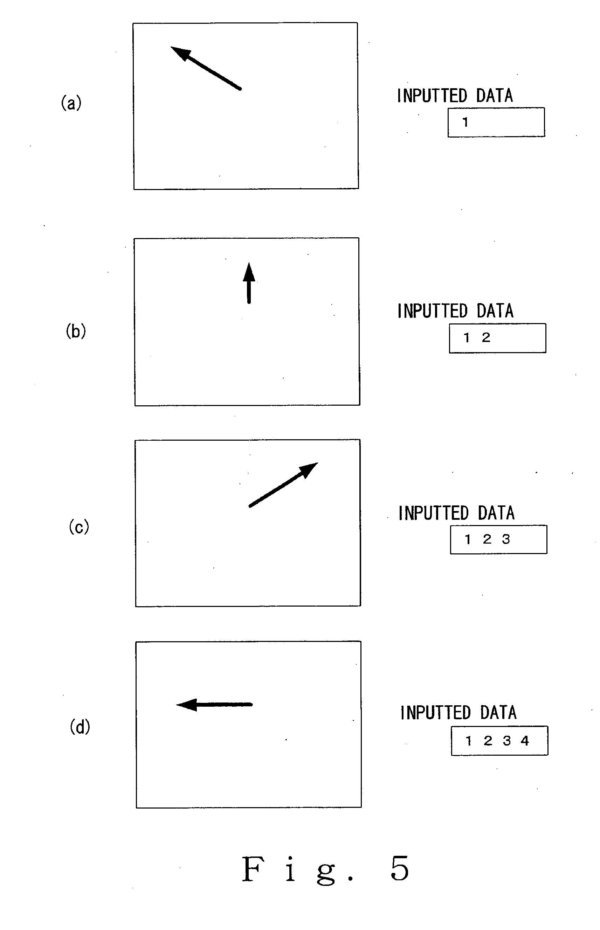

In the present embodiment, a user can perform an off operation of a key lock by inputting a four digit password with the contact sensor 56. For example, Fig. 5 is a diagram showing a use form of the contact sensor 56, and as shown in Fig. 5, the input of a password (e.g., 1234) is performed by a user's tracing on the contact sensor 56. More specifically, when a password is inputted by moving a finger on the contact sensor 56 continuously after touching a predetermined key, the key touched with the finger is regarded as a password. For example, as shown in Fig. 5A, first a user touches a key 5, moves a finger to the position of a key 1 on the contact sensor 56 after continuous touching, successively, and separates the finger from the key 1, so that a number input "1" is completed. In the same way, by performing the operations shown in the Figs. 5B through 5D, number inputs of "2" through "4" are completed.

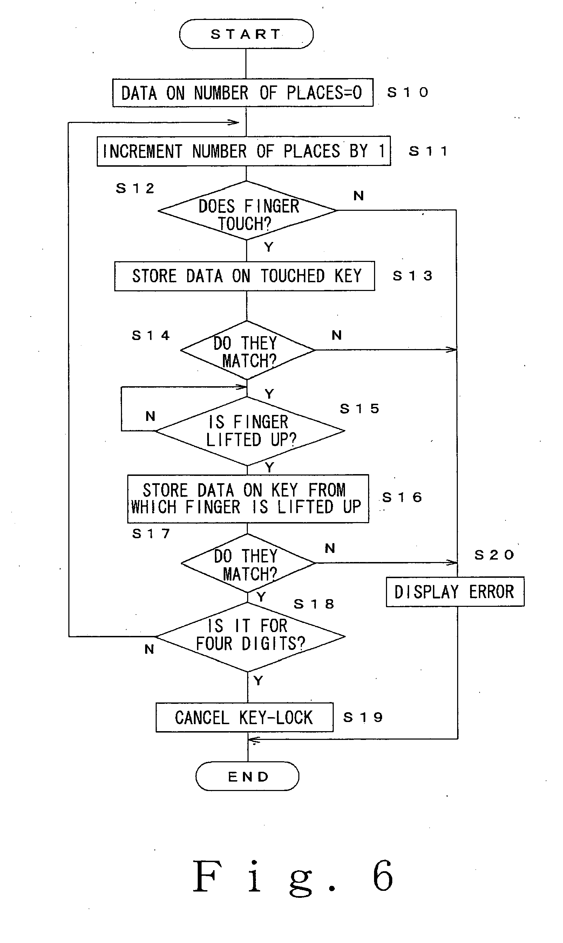

A registering operation of a password is described. Fig. 6 is a flow chart showing an operation in registering a password.

In step S1 of Fig. 6, the control circuit 36 sets data on the number of places to be stored in the buffer 71 to 0, and the process proceeds to step S2.

In step S2, the control circuit 36 stores the data on the number of places that is newly incremented by 1 in the buffer 71, and the process proceeds to step S3.

In step S3, when the control circuit 36 determines that a finger touches the contact sensor 56, the process proceeds to step S4, otherwise, the process proceeds to step S9.

In step S4, the control circuit 36 stores the data on the key that the finger touches in the step S3 in the buffer 71, and the process proceeds to step S5. Any key data can be used as long as the key data is information indicating a key position where a finger touches. For example, data of key array coordinates and key cord data of the keys which the finger touches can be used. Note that, since the key code corresponds to the key array coordinates, the key cord can be treated as the same information as the position information.

In step S5, when the control circuit 36 determines that a finger is lifted up from the contact sensor 56, the process proceeds to step S6.

[0050] In step S6, the control circuit 36 stores the data on the key which the user has touched immediately before the user's finger was last lifted up in the step S5, associating it with the data on the touched key stored in the buffer 71 in the step S4. Further, in the buffer 71, the data on the number of places stored in the step S2, the data on the key touched in step S3, and the data on the key from which the user separates the user's finger last in step S5 are stored. In this case, similarly, array coordinate data of the keys, key cord data of the keys that a finger touches, or the like can be used as key data.

In step S7, if the control circuit 36 determines that the data on the number of places stored in the buffer 71 is for four digits, the process proceeds to step S8, otherwise, the process returns to step S2.

In step S8, the control circuit 36 stores in the RAM 40 data of four digits in which the data on the number of places stored in the buffer 71, the data on a touched key, and the data on the key from which the user separates the user's finger last. Here, data stored in the RAM 40 becomes password data, and at the same time, the data stored in the buffer 71 is deleted.

In step S9, the control circuit 36 displays an error on the display 42, and the processing is finished.

By performing such processing, after the password registration is finished, the key-lock is turned on by a user's turning on the key-lock. The following describes an operation to turn off the key-lock when the key-lock is on.

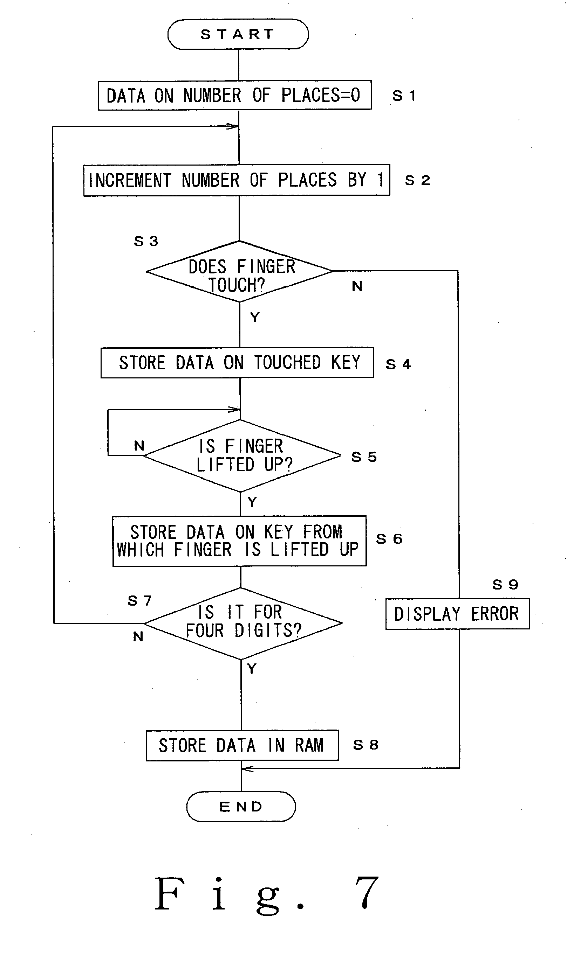

Fig. 7 is a flow diagram showing an operation performed to turn off the key-lock.

In step S10 of Fig. 7, the control circuit 36 sets data on the number of places stored in the buffer 71 to 0, and the process proceeds to step S11.

In step S11, the control circuit 36 increments the data on the number of places stored in the buffer 71 by 1 and stores the data in the buffer 71, and the process proceeds to step S12.

In step S12, when the control circuit 36 determines that a finger touches the contact sensor 56, the process proceeds to step S13.

In step S13, the control circuit 36 stores the data on the key that the finger touches in the step S12 in the buffer 71, and the process proceeds to step S14.

In step S14, the control circuit 36 compares the data on the key which the user first touches stored in the buffer 71 in the step S13 to the data on the key which the user first touches stored in the RAM 40. If they match, the process proceeds to step S15, otherwise, the process proceeds to step S20.

Subsequently, the control circuit 36 compares the data on the key first touched and corresponding to data on the number of places stored in the buffer 71 to the data on the key first touched and corresponding to the data on the number of places stored in the RAM 40. For example, if the data on the key first touched and corresponding to the data indicating the first digit in the buffer 71 is a numeric key 4, on the other hand, if the data on the key first touched and corresponding to the data indicating the first digit in the RAM 40 is a numeric key 4, the control circuit 36 determines that they match, but if the data on the key first touched in the first digit stored in the RAM 40 is a number except a numeric key 4, as a result, the control circuit 36 determines that they do not match.

In step S15, if the control circuit 36 determines that a finger is lifted up from the contact sensor 56, the process proceeds to step S16.

In step S16, the control circuit 36 stores the data on the key which the user has touched immediately before the user's finger was last lifted up in the step S15, associating it with the data on the touched key stored in the buffer 71 in the step S13. Further, in the buffer 71, the data on the number of places stored in step S11, the data on the touched key stored in step S13, and the data on the key from which the user separates the user's finger last in the step S15 are stored.

In the following step S17, the control circuit 36 compares the data on the key from which the user separates the finger last stored in the buffer 71 in the step S16 to the data on the key from which the user separates the finger last stored in the RAM 40, and if they match, the process proceeds to step S18, otherwise, the process proceeds to step S20. Subsequently, the control circuit 36 compares the data on the key from which the user separates the finger and which corresponds to the data on the number of places stored in the buffer 71 to the data on the key from which the user separates the finger and which corresponds to data on the number of places stored in the RAM 40.

For example, if the data on the key from which the user separates the finger and which corresponds to data indicating the first digit in the buffer 71 is a numeric key 4, on the other hand, if the data on the key from which the user separates the finger and which corresponds to the data indicating the first digit in the RAM 40 is a numeric key 4, the control circuit 36 determines that they match, but if the data on the key from which the user separates the finger and which corresponds to the number data on the first digit stored in the RAM 40 is data except a numeric key 4, as a result, the control circuit 36 determines that they do not match.

In step S18, if the control circuit 36 determines that the data stored in the buffer 71 is for four digits, the process proceeds to step S19, otherwise, the process returns to step S11.

In step S19, the control circuit 36 cancels the key-lock, and the processing is finished.

In step S20, the control circuit 36 displays an error on the display 42, and the processing is finished.

As described above, in the embodiment device, when each digit of a password is inputted, unless the position information on the key which the user first touches and the position information on the key which the user has touched immediately before the user's finger was last lifted up are matched for each digit, the key-lock cannot be canceled. Thus, in comparison with a related art method for merely entering a four digit number by a depressing operation, the password input is complicated, which can make it difficult for a third person to steal a correct password or see an input operation, and input the password number thus leaked.

In the embodiment described as above, an example to use information indicating a position of a key touched with a finger for one digit of a password is described, however, the contact sensor 56 can be structured as a contact sensor provided with a plurality of keys for detecting a finger contact, enabling to store and collate a plurality of pairs associating the first information indicating a key where a finger touches on the contact sensor with the second information indicating a key where the finger is lifted up from the contact sensor after continuous touching.

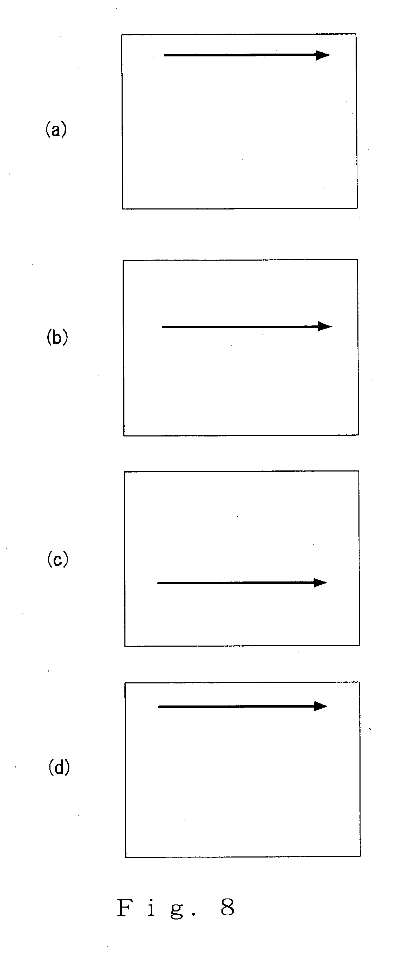

In addition, as another embodiment of the invention, the input device may be arranged such that, as line information inputted by a finger touching the contact sensor 56, information of a row or column on the contact sensor 56 to which the line is inputted is stored in the storage means to be collated. Fig. 8 is a diagram showing a display form when such an embodiment is used.

In the present embodiment, by a user's inputting four lines (hereinafter referred to as PIN line, and the PIN line plays a role of a password) with the contact sensor 56, the key-lock can be turned off. For example, Fig. 8 is a figure showing a use form of the contact sensor 56. As shown in Fig. 8, by a user's moving a finger vertically or laterally on the contact sensor 56, four PIN lines are inputted.

More specifically, for example, when a PIN line is inputted, first moving a finger on the contact sensor 56 to draw one line on the first row (a row constituted by the keys 1, 2, and 3) (Fig. 8A), then moving a finger on the contact sensor 56 to draw one line on the second row (a row constituted by the keys 4,5, and 6) (Fig. 8B), moving a finger on the contact sensor 56 to draw one line on the third row (a row constituted by the keys 7, 8, and 9) afterwards (Fig. 8C), and finally moving a finger on the contact sensor 56 to draw one line on the first row (a row constituted by the keys 1, 2, and 3) (Fig. 8D) makes the PIN lines inputted.

It should be noted that to set the four PIN lines, not only horizontal lines but also vertical lines may be set, however, oblique lines cannot be set. Moreover, as shown in Fig. 8, four PIN lines are inputted in the order of the first row, the second row, the third row, and the first row, however, the input order is not limited to this, and a user can freely select which one of the four lines is inputted to which row or column.

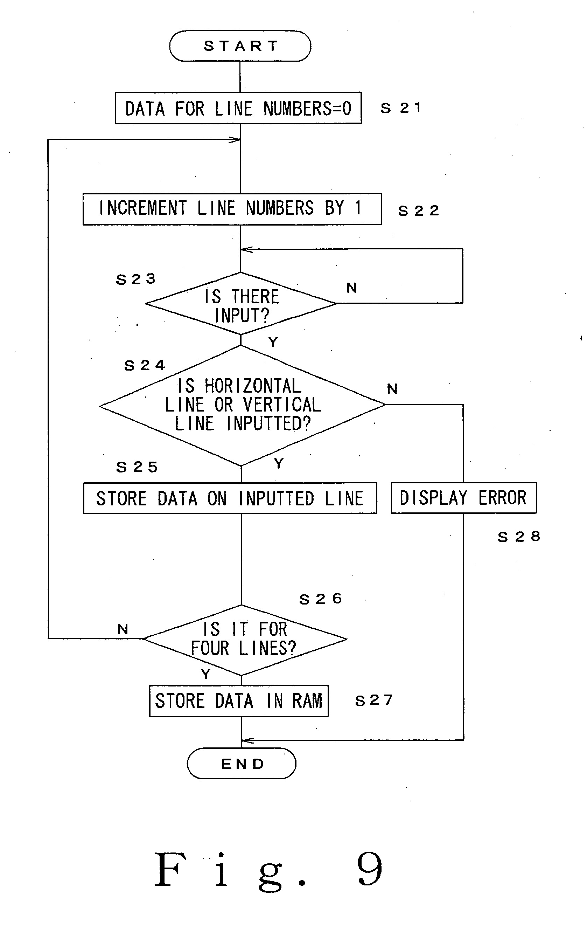

First an operation at the time of performing the PIN line registration is described. Fig. 9 is a flow diagram showing an operation performed when a PIN line is registered.

In step S21 of Fig. 9, the control circuit 36 sets data for line numbers stored in the buffer 71 to 0, and the process proceeds to step S22.

In step S22, the control circuit 36 stores the data for line numbers by incrementing it by 1 in the buffer 71, and the process proceeds to step S23. The data for line numbers incremented by 1 here is the data for line numbers stored in the step S21 (or the data for line numbers stored in the buffer 71 after processed in step S26) with an increment of 1.

Furthermore, although a four digit number is inputted for conventional password input, four PIN lines (four lines) are inputted in the present embodiment. As a result, every time the steps S22 through S26 are repeated, as a four digit password is inputted, data for line numbers for one through four as well as PIN line data corresponding to the data for line numbers are stored in the buffer 71. In other words, when steps S22 through S26 are repeated four times, data for four line numbers and PIN line data will be stored in the buffer 71.

In step S23, if the control circuit 36 determines that there is an input on the contact sensor 56, the process proceeds to step S24. In contrast, if the control circuit 36 determines that there is no input on the contact sensor 56, step S23 is repeated.

In step S24, the control circuit 36 determines whether the line inputted in the step S23 is a vertical line or a horizontal line, if the line is either a vertical or a horizontal line, the process proceeds to step S25. On the other hand, if the control circuit 36 determines that the input is an oblique line, a simple dot, or the like except a vertical line or a horizontal line, the process proceeds to step S8.

In step S25, the control circuit 36 stores the data on the line inputted in the step S24 in the buffer 71. More specifically, the control circuit 36 stores in the buffer 71 the data indicating in which row or column the line is inputted, by associating it with the data for line numbers.

In step S26, when the control circuit 36 determines that the data for line numbers stored in the buffer 71 is for four lines, the process proceeds to step S27, otherwise, the process returns to step S22.

In step S27, the control circuit 36 stores in the RAM 40 data for four lines in which the data for line numbers and the PIN line data stored in the buffer 71 are associated with each other. At the same time, the data stored in the buffer 71 is deleted.

In step S28, the control circuit 36 displays an error on the display 42, and the processing is finished.

By performing such processing, after the PIN line registration is finished, the key-lock is turned on by a user's turning on the key-lock. The following describes an operation to turn off the key-lock when the key-lock is on.

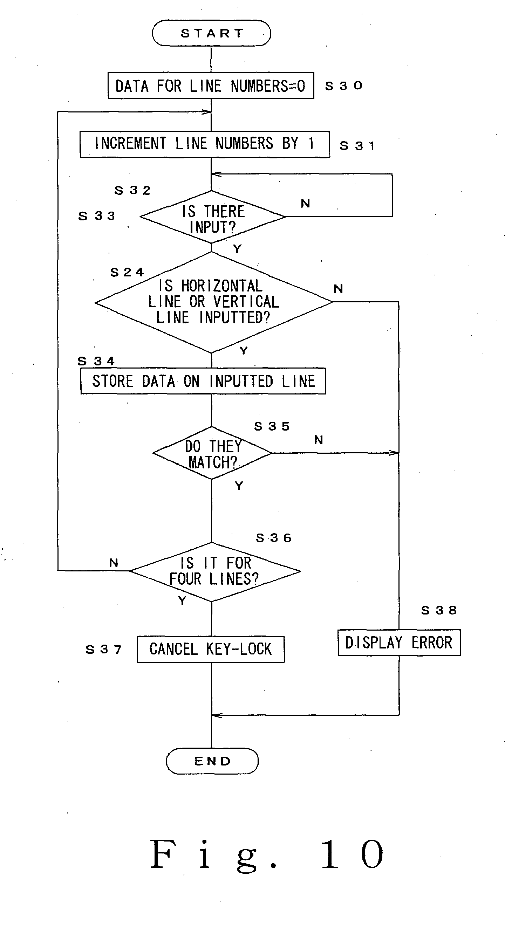

Fig. 10 is a flow diagram showing an operation performed to turn off the key-lock.

In step S30 of Fig. 10, the control circuit 36 sets data for line numbers stored in the buffer 71 to 0, and the process proceeds to step S31.

In the following step S31, the control circuit 36 stores in the buffer 71 the data for line numbers by newly incrementing it by 1, and the process proceeds to step S33. The data for line numbers incremented by 1 here is the data for line numbers stored in the step S30 (or the data for line numbers stored in the buffer 71 after processed in step S36) with an increment of 1.

Furthermore, although a four digit number is inputted for conventional password input, four PIN lines (four lines) are inputted in the present embodiment. As a result, every time the steps S31 through S36 are repeated, as a four digit password is inputted, data for line numbers for one through four as well as PIN line data corresponding to the data for line numbers are stored in the buffer 71. In other words, when steps S32 through S36 are repeated four times, data for four line numbers and PIN line data will be stored in the buffer 71.

In step S32, if the control circuit 36 determines that a finger touches the contact sensor 56, the process proceeds to step S33. In contrast, if the control circuit 36 determines that there is no input on the contact sensor 56, step S32 is repeated.

In step S33, the control circuit 36 determines whether the line inputted in the step S32 is a vertical line or a horizontal line. If the line is either a vertical or a horizontal line, the process proceeds to step S34, otherwise the process proceeds to step S38. In Step S34, data on the inputted PIN lines and data for line numbers are stored in the buffer 71.

In the following step S35, the control circuit 36 compares the data for line numbers and the PIN line data stored in the buffer 71 in the step S34 to the data for line numbers and the PIN line data stored in the RAM 40. If they match, the process proceeds to step S36, otherwise, the process proceeds to step S38.

Subsequently, the control circuit 36 compares the PIN line data corresponding to the data for line numbers stored in the buffer 71 to the PIN line data corresponding to the data for line numbers stored in the RAM 40. For example, if the PIN line data corresponding to the data indicating that the data is in the first line in the buffer 71 is in the first row, on the other hand, if the PIN line data corresponding to the data indicating that the data is in the first line in the RAM 40 is in the first row, the control circuit 36 determines that they match, but if the data indicating that the data is in the first line stored in the RAM 40 is in other lines except the first row (for example, the second row, the third row, the first column, the second column, or the like), as a result, the control circuit 36 determines that they do not match.

In step S36, if the control circuit 36 determines that the data for line numbers stored in the buffer 71 is for four digits, the process proceeds to step S37, otherwise, the process returns to step S31.

In step S37, the control circuit 36 determines that the inputted data on four PIN lines are all correct ones, and cancels the key-lock and also deletes the data stored in the buffer 71.

In step S38, the control circuit 36 displays an error on the display 42, and the processing is finished.

The password or PIN line registration in Figs. 6 and 9 is shown as examples of a registration by inputting a four digit password or PIN line. However, by inputting the same password or PIN line twice from the contact sensor, the data on a password or PIN line first inputted and the data on a password or PIN line inputted in the second time may be collated for each place, and registered in the RAM 40 if the collation result matches. In this case, the buffer 71 may be arranged to store data on the password or PIN line first inputted for each place in the first area, store data on the password or PIN line inputted in the second time for each place in the second area of the buffer 71, so as to collate both data.

In this way, by inputting the same shape (for example, a password or a PIN line), the password or PIN line inputted once can be confirmed as to whether they are recognized correctly.

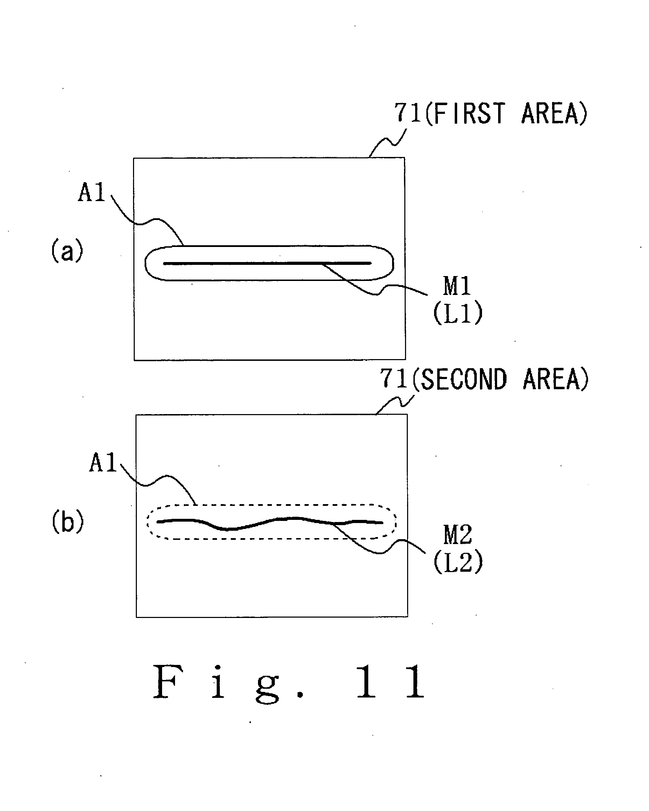

Here, the collation of data on the password or PIN line first inputted and stored in the first area of the buffer 71 with data on the password or PIN line inputted in the second time in the second area of the buffer 71 can be performed as follows. That is, as shown in Fig. 11A, first, a user moves a finger on a horizontal line. Since a finger has a width, the contact sensor 56 does not detect a thin line contact, but a contact of a line having a width to some extent (the width of the finger). As a result, it is determined that a line is drawn on the center of the fingerbreadth.

That is, the drawn line is determined as M1 (L1) as shown in Fig. 11A. However, if the line is registered, it will be difficult for a user to completely follow the same track to draw a line again. As a result, some margin region (A1 in Fig. 11A) for a line is set. The margin region has the width of about 10 to 20% of a user's fingerbreadth, and as shown in Fig. 11B, when a user draws a line so that the center of the user's fingerbreadth (M2 (L2)) is in the margin region (A1), it is determined that the same line is inputted.

In addition, even when a user inputs a similar shape (for example, a line obtained by enlarging or reducing the horizontal line in Fig. 11A) to the registered shape, it is possible to determine that a matching shape is inputted. For example, when an enlarged horizontal line is inputted, the registered line (M1 in Fig. 11A) and the margin region (A1 in Fig. 11A) are enlarged and checked as to whether there is a match with the inputted horizontal line (a line drawn on the center of the user's fingerbreadth) to determine whether a matching shape is inputted or not. On the other hand, if a reduced horizontal line is inputted, the registered line (M1 in Fig. 11A) and the margin region (A1 in Fig. 11A) are reduced and checked as to whether there is a match with the inputted numbers (a horizontal line drawn on the center of the user's fingerbreadth) to determine whether a matching shape is inputted or not.

As described above, in the embodiment device, the input positions of four lines are regarded as a password, as a result, in comparison with a related art method for inputting a four digit number by a depressing operation, the password input is complicated, which can make it more difficult for a third person to input a correct password.

It should be noted that a portable telephone is described in the present embodiment as an example, however, an input device of the present invention for inputting a password can be applied to an automatic teller machine (ATM) in banks, a personal digital assistant (PDA), and the like as well as a portable telephone.

## Claims

1. An input device for inputting a password, comprising:
a contact sensor;
storage means for storing line information inputted by a finger touching the contact sensor;
disabling means for disabling an execution of a particular function; and
control means for permitting, while the disabling means disables the particular function, execution of the particular function upon determining that the line information stored in the storage means is inputted from the contact sensor.

2. The input device for inputting a password according to claim 1, wherein the storage means stores first information indicating a position where a finger touches on the contact sensor, and second information indicating a position where the finger is lifted up from the contact sensor after continuous touching.

3. The input device for inputting a password according to claim 2, wherein the control means permits, while the disabling means disables a particular function, execution of the particular function upon determining that the first information and the second information stored in the storage means are inputted from the contact sensor.

4. The input device for inputting a password according to claim 2, wherein
the contact sensor has a plurality of keys for detecting a finger contact, and
the storage means stores a plurality of pairs associating the first information with the second information, the first information indicating a key where a finger touches on the contact sensor, and the second information indicating a key where the finger is lifted up from the contact sensor after continuous touching.

5. The input device for inputting a password according to claim 1, wherein the storage means stores information showing in which row or column on the contact sensor the line is inputted, as the line information indicating where a finger touches on the contact sensor.

6. A portable telephone having an input device for inputting a password, comprising:
a contact sensor;
storage means for storing line information inputted by a finger touching the contact sensor;
disabling means for disabling an execution of a particular function; and
control means for permitting, while the disabling means disables a particular function, execution of the particular function upon determining that the line information stored in the storage means is inputted from the contact sensor.

7. The portable telephone according to claim 6, wherein the storage means stores first information indicating a position where a finger touches on the contact sensor, and second information indicating a position where the finger is lifted up from the contact sensor after continuous touching.

8. The portable telephone according to claim 7, wherein the control means permits, while the disabling means disables a particular function, execution of the particular function upon determining that the first information and the second information stored in the storage means are inputted from the contact sensor.

9. The portable telephone according to claim 7, wherein
the contact sensor has a plurality of keys for detecting a finger contact, and
the storage means stores a plurality of pairs associating the first information with the second information, the first information indicating a key where a finger touches on the contact sensor, and the second information indicating a key where the finger is lifted up from the contact sensor after continuous touching.

10. The portable telephone according to claim 6, wherein the storage means stores information showing in which row or column of the contact sensor the line is inputted as the line information indicating where a finger touches on the contact sensor.
